# EUROPEAN PATENT SPECIFICATION

(11) **EP 0 647 540 B1**
(45) Date of publication and mention of the grant of the patent: **17.12.1997**
(21) Application number: 94114780.3
(22) Date of filing: 20.09.1994
(51) Int. Cl.: B60K 26/02, B60K 41/00

(54) **Device for operating the accelerator of an automobile by drivers deprived of the use of their legs**
Einrichtung zur Betätigung des Fahrpedals eines Kraftfahrzeuges von Lenkern, welche im Gebrauch ihrer Beine behindert sind
Dispositif pour commander la pèdale d'accélérateur d'un véhicule pour chauffeurs privés de l'usage leur jambes

(30) Priority: 06.10.1993 IT MI930771 U
(43) Date of publication of application: 12.04.1995
(73) Proprietor: LINEA GUIDA S.r.l., I-27100 Pavia (IT)
(72) Inventor: Gianini, Bruno, I-27100 Pavia (IT)
(74) Representative: Minoja, Fabrizio

(56) References cited:
- EP-A- 0 114 673
- DE-A- 2 333 546
- DE-A- 2 841 786
- FR-A- 2 597 038

## Description

This invention concerns a device for operating the accelerator of an automobile by drivers deprived of the use of the legs. More particularly, the invention concerns the perfecting of this type of device.

As is well known, cars for disabled persons are equipped in such a way that the traditional pedals are substituted by controls worked by hand.

In particular, the most common system for accelerator control is that of a control ring set coaxially with the steering wheel, normally above the wheel and which operates the accelerator by axial movement through suitable straight-line motion.

Devices of this type in current use have a complicated design, inasmuch as they have complex guide systems for the control ring and its movement towards and away from the steering wheel and are thus rather costly.

Furthermore, these known systems always have a certain stiffness of action which can increase if the device is not regularly and carefully maintained and which makes the control ring action rather uncertain.

DE-A- 2.841.786 describes an accelerator control device having the features of the preamble of appended claim 1.

The object of the invention is to eliminate the above mentioned defects in providing an accelerator control device which is of very simple design and therefore economical and which is extremely easy to use with minimum effort, even by one finger of the hand.

Another object of the invention is that of allowing the accelerator control device to be operated by a control ring which can be placed either above or below the steering wheel or even with two control rings placed respectively above and below the wheel, without this requiring any structural modification.

These objectives are attained, according to the invention, by providing at least two guide stems, fixed to but running away from the spokes of the steering wheel and parallel to the axis of this latter and along which runs a collar which actuates a linkage which acts in its turn on the car accelerator pedal. There is also a control ring which can be placed either above or below the car steering wheel.

Two control rings can be used advantageously, one above and the other below the steering wheel.

Further features of the invention will become clearer from the following detailed description which refers to a purely exemplary form and is therefore not limitative and which is illustrated in the attached drawings:
- Figure 1: is a lateral view, showing the steering wheel and a control ring in section, with some parts removed and with the accelerator control device according to the invention shown in its first position, for example at rest.
- Figure 2: is a similar view to Figure 1 but with the device in a second position, for example during operation.
- Figure 3: is a plan view of a particular detail in the sense of arrow B of Figure 1.
- Figure 4: is a section through a line IV-IV of Figure 3.

Concerning these drawings, that with reference number 1 indicates an automobile steering wheel, shown in section and which is joined to a central hub (2) by means of radial arms or spokes (3) three in number for example. A steering column (4) which transmits the steering movements to the wheels runs from the hub (2). Naturally the three components: steering wheel, hub and steering column are carefully joined together.

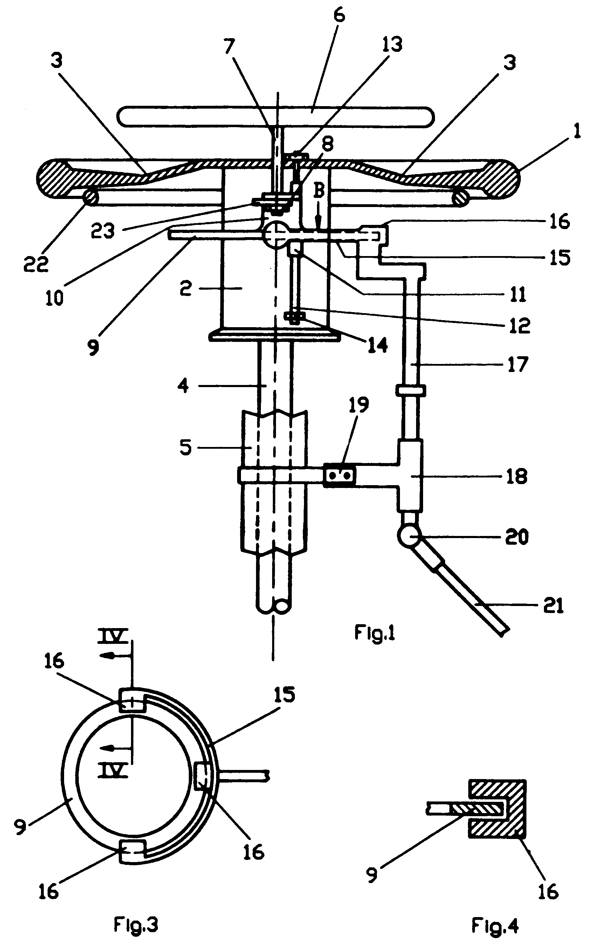

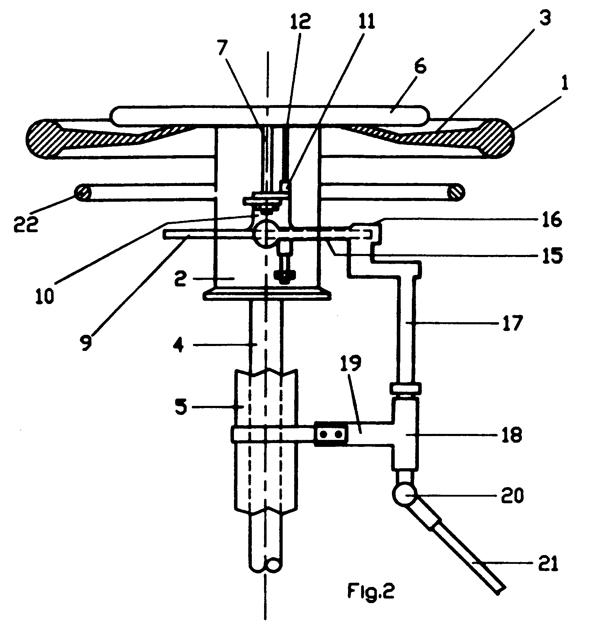

A lining sleeve (5) is placed around the steering column (4) and is partially shown in Figures 1 and 2. It is fixed so as not to rotate with the column (4).

The control device according to the invention includes a flat collar (9) set coaxially around the hub (2) and which carries a couple of supports (10) with respective tubular couplings (11) for axial movement on the corresponding stems (12) set parallel to the steering column (4) and attached at the top to the spokes (3) of the steering wheel (1), for example by screws (13). Naturally, the guide stems (12) can be fixed directly in holes drilled in the spokes (3) of the steering wheel (1) or to plates which are fixed to the spokes in their turn.

The stems (12) are free at the bottom where a nut (14) can be placed as a closure.

The movement of the flat collar (9) can take place, according to the invention, either with a control ring set above or below the steering wheel (1) or in both positions.

A control ring (6), set coaxially above the steering wheel (1) is shown on the attached drawing and is joined through a couple of stems (7) to the above mentioned supports (10) and fixed by screws (8).

A further control ring (22) is set coaxially around the hub (2) below the steering wheel (1) between this and the flat collar (9) and is fixed to the supports (10) by a couple of plates (23) in using the same control ring (6) fixing screws (8).

The kinematic motion actuating the accelerator includes a semi-circular bracket (15) which engages the collar (9) at several (3 in the example shown) U points, in free sliding material (16) (see Figures 3 and 4 in particular).

A rod (17) is joined to the bracket (15) and is set substantially parallel to the steering column (4) and slides in a jacket (18) whose stem (19) is attached to the fixed lining sleeve (5) which covers the steering column (4).

The lower extremity of the rod (17) is joined by means of a ball joint (20) to another rod (21) which actuates the accelerator.

The functioning of the device according to the invention by an action of pressing on the control rings, in particular the upper one, is now explained.

In such a case, in the idling position, the various parts are disposed as shown in Figure 1, with the control rings (6) and (22) held in position by the push of the accelerator pedal acting on the lower rod (21) or by the action of a possible auxiliary spring which is not shown here.

To accelerate, slight pressure is applied to the upper control ring (6) which causes an axial displacement of the collar (9) which pushes the rod (17) through the bracket (15) in the same direction and this rod running through the fixed jacket (18) acts through the ball joint (20) on the lower rod (21) which actuates the car's accelerator. Figure 2 shows how the various parts are disposed in the position of full throttle.

When it is desired to operate the device by means of the lower control ring (22) (in countries where this is allowed by the regulations), it will be convenient to invert the motion of acceleration and thus accelerate in approaching the control ring (22) towards the steering wheel (1) instead of pushing it downwards as this will obviously be easier for the user.

This can be done by very simple means which will not be further described here, such for example as a return device at the end of the rod (21) and/or an elastic device which will tend to hold the control ring away from the steering wheel in the idling position.

It is confirmed that two control rings (6) and (22) are not necessary together for the functioning of the device according to the invention but that one of them only is sufficient.

It is also evident that normal operation of the steering wheel (1) is not obstructed by the device according to the invention.

In fact when the steering wheel is turned, the control rings (6) and (22) and the collar (9) turn with it, whereas the accelerator operating linkage consisting of the bracket (15) and the rods (17) and (21) remains fixed.

From the above description, the advantages of the device according to the invention appear evident. For example, the use of a lower control ring (22) for operating the device allows a collision safety device known as an air bag to be fitted to the steering wheel (1).

## Claims

1. Device for operating the accelerator of an automobile by drivers deprived of the use of their legs and consisting of a control ring (6, 22) set coaxially to the steering wheel (1) and fixed to it with regard to rotation but with the possibility of axial displacement to actuate the accelerator through a suitable linkage fixed around the steering hub (2) and steering column (4), said control ring (6, 22) acting on a collar (9), set coaxially around the steering wheel (1) hub (2), the translatory movement of the collar (9) actuating the said linkage which operates the accelerator, characterized in that said collar (9) is moving on guide stems (12) fixed to the spokes (3) of the steering wheel.

2. Device according to claim 1, characterized by the fact that the said collar (9) has two supports (10) with respective tubular couplings (11) moving on the said guide stems (12).

3. Device according to claims 1 or 2, characterized by the fact that the said control ring (6) is set above the steering wheel (1) and is fixed to the said collar (9) by means of support and connection stems (7).

4. Device according to claims 1 or 2, characterized by the fact that the said control ring (22) is placed coaxially beneath the steering wheel (1) and is fixed to the said collar (9) by means of support plates (23).

5. Device according to any one of the previous claims, characterized by the fact that the said control rings (6 and 22) are for use in combination.

6. Device according to any one of the previous claims, characterized by the fact that the said collar (9) is of a flattened type and accommodates several U seatings (16) of a semicircular bracket (15), attached rigidly to a rod (17), moving in a fixed jacket (18) and acting with its lower end, through a ball joint (20), on a further rod (21).

## Patentansprüche

1. Vorrichtung zum Bedienen des Gaspedals eines Automobils durch Fahrer, die in der Verwendung ihrer Beine eingeschränkt sind, mit einem Kontrollring (6, 22), der koaxial zu dem Lenkrad (1) angebracht und in bezug auf Drehung, aber mit der Möglichkeit einer axialen Verschiebung an ihm befestigt ist, um das Gaspedal über eine geeignete Verbindung zu betätigen, die um die Lenknabe (2) und die Lenksäule (4) herum befestigt ist, wobei der Kontrollring (6, 22) auf einen Franz (9) einwirkt, der koaxial um die Lenkrad (1)-Nabe (2) herum angebracht ist, wobei die translatorische Bewegung des Kranzes (9) die Verbindung betätigt, die das Gaspedal bedient, dadurch **gekennzeichnet**, daß sich der Kranz (9) auf Führungsstielen (12) bewegt, die an den Speichen (3) des Lenkrads befestigt sind.

2. Vorrichtung nach Anspruch 1, dadurch **gekennzeichnet**, daß der Kranz (9) zwei Träger (10) mit entsprechenden röhrenförmigen Kupplungsstücken (11) aufweist, die sich auf den Führungsstielen (12) bewegen.

3. Vorrichtung nach Anspruch 1 oder 2, dadurch **gekennzeichnet**, daß der Kontrollring (6) über dem Lenkrad (1) angebracht ist und an dem Kranz (9) mit Hilfe von Trage- und Verbindungsstielen (7) befestigt ist.

4. Vorrichtung nach Anspruch 1 oder 2, dadurch **gekennzeichnet**, daß der Kontrollring (22) koaxial unter dem Lenkrad (1) angeordnet ist und an dem Kranz (9) mit Hilfe von Trageplatten (23) befestigt ist.

5. Vorrichtung nach einem der vorhergehenden Ansprüche, dadurch **gekennzeichnet**, daß die Kontrollringe (6 und 22) für eine Verwendung in Kombination ausgebildet sind.

6. Vorrichtung nach einem der vorhergehenden Ansprüche, dadurch **gekennzeichnet**, daß der Kranz (9) von einer abgeflachten Sorte ist und einige U-Sitze (16) einer halbkreisförmigen Stütze (15) aufnimmt, die starr an einer Stange (17) befestigt ist, die sich in einem festen Mantel (18) bewegt und mit ihrem unteren Ende über ein Kugelgelenk (20) auf eine weitere Stange (21) einwirkt.

## Revendications

1. Dispositif pour faire actionner l'accélérateur d'une automobile par des conducteurs privés de l'usage de leurs jambes et consistant en un anneau de commande (6, 22) placé coaxialement au volant (1) et fixé à celui-ci par rapport à la rotation mais avec la possibilité d'un déplacement axial pour actionner l'accélérateur par l'intermédiaire d'une liaison adéquate fixée autour du moyeu (2) du volant et de la colonne de direction (4), ledit anneau de commande (6, 22) agissant sur un collier (9), placé coaxialement autour du moyeu (2) du volant (1), le mouvement de translation du collier (9) actionnant ladite liaison qui fait fonctionner l'accélérateur, caractérisé en ce que ledit collier (9) se déplace sur des tiges de guidage (12) fixées aux rayons (3) du volant.

2. Dispositif selon la revendication 1, caractérisé par le fait que ledit collier (9) possède deux supports (10) avec des accouplements tubulaires respectifs (11) se déplaçant sur lesdites tiges de guidage (12).

3. Dispositif selon les revendications 1 ou 2, caractérisé par le fait que ledit anneau de commande (6) est place au-dessus du volant (1) et fixé audit collier (9) par des tiges de support et de liaison (7).

4. Dispositif selon les revendications 1 ou 2, caractérisé par le fait que ledit anneau de commande (22) est placé coaxialement sous le volant (1) et fixé audit collier (9) par des plaques de support (23).

5. Dispositif selon l'une quelconque des revendications précédentes, caractérisé par le fait que lesdits anneaux de commande (6, 22) sont à utiliser de manière combinée.

6. Dispositif selon l'une quelconque des revendications précédentes, caractérisé par le fait que ledit collier (9) est d'un type aplati et comporte plusieurs logements en U (16) pour une bride de fixation semi-circulaire (15), fixée rigidement à une tige (17) se déplaçant dans une gaine fixe (18) et agissant par son extrémité inférieure sur une autre tige (21), par l'intermédiaire d'une rotule (20).
